# EUROPÄISCHE PATENTANMELDUNG

(11) **EP 1 894 503 A1**
(43) Veröffentlichungstag der Anmeldung: **05.03.2008**
(21) Anmeldenummer: 07015390.3
(22) Anmeldetag: 06.08.2007
(51) Int. Cl.: A47J 39/00

(54) **Wärmeregal**

(30) Priorität: 30.08.2006 DE 202006013326 U
(71) Anmelder: Gronbach Forschungs- und Entwicklungs GmbH & Co. KG, 6342 Niederndorf (AT)
(72) Erfinder: Weweck, Alexander, 83026 Rosenheim (DE)
(74) Vertreter: Zinnecker, Armin

(57) **Zusammenfassung**

Ein verbessertes Wärmeregal ist gekennzeichnet durch ein Gestell (1), das Seitenwände (3, 4) mit Führungen (5) umfaßt, und durch Wärmeplatten (2), die einen Rahmen (10, 11, 12, 13) und eine Heizplatte (14) umfassen (Fig. 3).

## Beschreibung

Die Erfindung betrifft ein Wärmeregal.

Aus der EP 1 513 374 A2 ist eine Wärmelade bekannt, die insbesondere als Einbaugerät verwendet werden kann. Die Wärmelade umfaßt ein Gehäuse, in dem eine Schublade verschieblich geführt ist. Das Gehäuse kann in eine Küche oder ein Küchengerät eingebaut werden. Die Schublade weist eine beheizbare Platte auf, die aus Glas hergestellt sein kann.

Aufgabe der Erfindung ist es, ein auf einfache Weise herstellbares und benutzbares Wärmeregal vorzuschlagen.

Erfindungsgemäß wird diese Aufgabe durch ein Wärmeregal mit den Merkmalen des Anspruchs 1 gelöst. Das Wärmeregal weist ein Gestell mit Seitenwänden und Führungen und Wärmeplatten mit einem Rahmen und einer Heizplatte auf. Die bei der EP 1 513 374 vorhandenen Gehäuse, in denen eine Schublade mit einer beheizbaren Platte verschieblich geführt ist, sind nicht erforderlich, wodurch der Aufbau und die Handhabung vereinfacht werden.

Vorteilhafte Weiterbildungen sind in den Unteransprüchen beschrieben.

Vorteilhaft ist es, wenn eine Stromkupplung an der Wärmeplatte und an dem Gestell vorgesehen ist, die dazu dient, die Heizplatte mit elektrischer Energie zu versorgen. Die Stromkupplung ist vorzugsweise an einem hinteren Rahmenteil der Wärmeplatte vorgesehen.

Vorzugsweise sind die Wärmeplatten in dem Gestell fixierbar. Dies ist insbesondere dann von Vorteil, wenn Stromkupplungen vorgesehen sind. Durch die Fixierung der Wärmeplatten in dem Gestell kann erreicht werden, daß die verbundenen Stromkupplungen zuverlässig verbunden bleiben.

Die Wärmeplatten können in dem Gestell durch eine Verriegelungsnase fixierbar sein. Stattdessen oder zusätzlich können sie durch ein Kugeldruckstück oder einen Rollenschnäpper fixierbar sein.

Eine weitere vorteilhafte Weiterbildung ist dadurch gekennzeichnet, daß an dem Gestell ein Führungsvorsprung und an der Wärmeplatte eine entsprechende Führungsvertiefung vorgesehen sind. Hierdurch kann gewährleistet werden, daß die Wärmeplatten eine korrekte Lage in dem Wärmeregal einnehmen. Dies ist insbesondere dann von Vorteil, wenn Stromkupplungen vorhanden sind. Dann kann durch den Führungsvorsprung und die Führungsvertiefung gewährleistet werden, daß die Stromkupplungen zuverlässig miteinander verbunden werden.

Eine weitere vorteilhafte Weiterbildung ist gekennzeichnet durch eine Elektronik zum Regeln der Temperatur einer oder mehrerer oder aller Heizplatten.

Ein Ausführungsbeispiel der Erfindung wird nachstehend anhand der beigefügten Zeichnung im einzelnen erläutert. In der Zeichnung zeigt
- Fig. 1: ein Wärmeregal in einer perspektivischen Ansicht,
- Fig. 2: das Wärmeregal gemäß Fig. 1 in einer Ansicht von vorne,
- Fig. 3: das Wärmeregal gemäß Fig. 1 und 2 in einer perspektivischen Ansicht, wobei Teile der linken Seitenwand, der hinteren Wand und der oberen Wand des Gestells in der zeichnerischen Darstellung weggelassen worden sind,

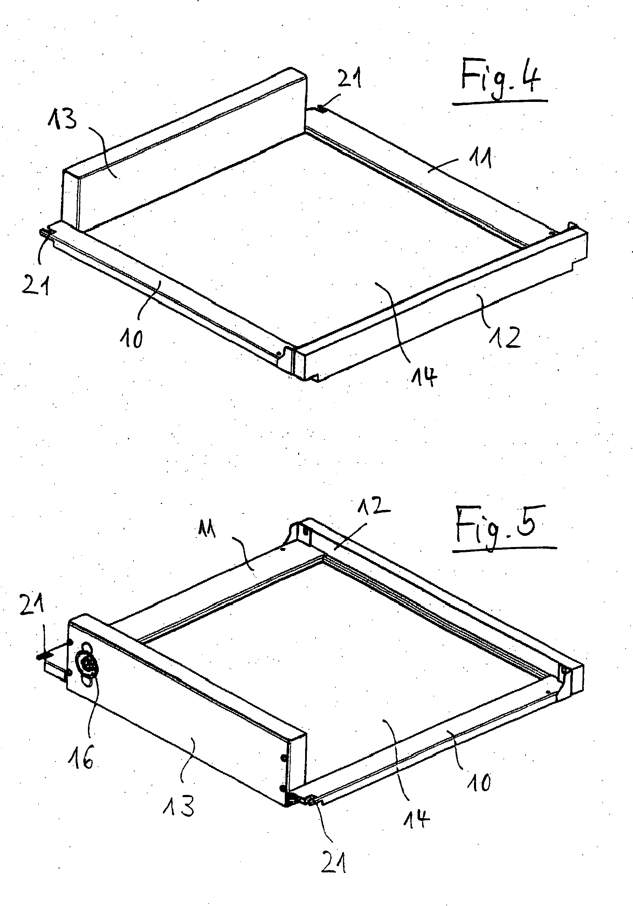

- Fig. 4: eine Wärmeplatte in einer perspektivischen Ansicht von schräg vorne,
- Fig. 5: die Wärmeplatte gemäß Fig. 4 in einer Ansicht von schräg hinten und
- Fig. 6: die Wärmeplatte gemäß Fig. 4 und 5 in einer Ansicht von oben.

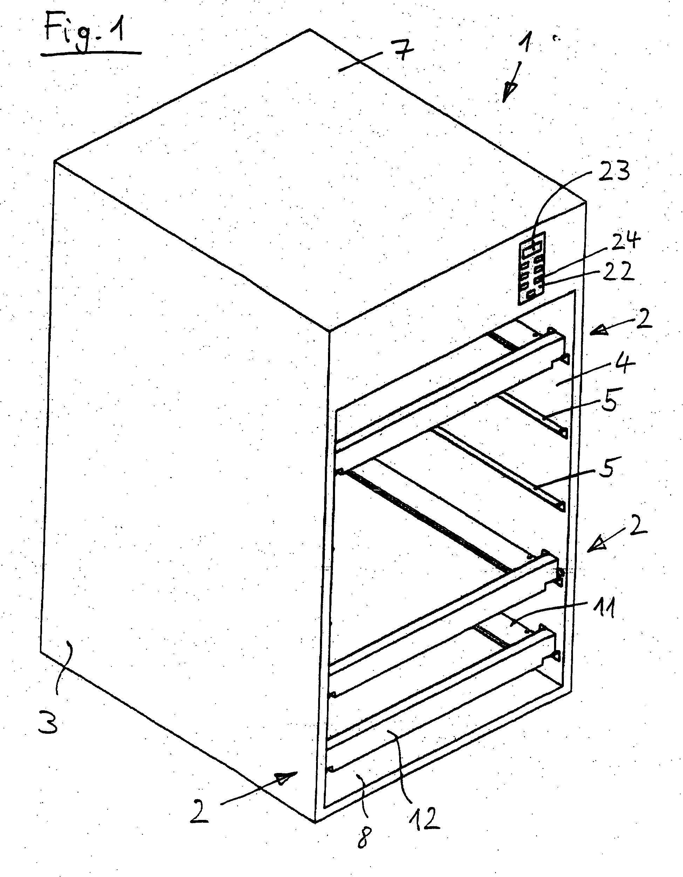

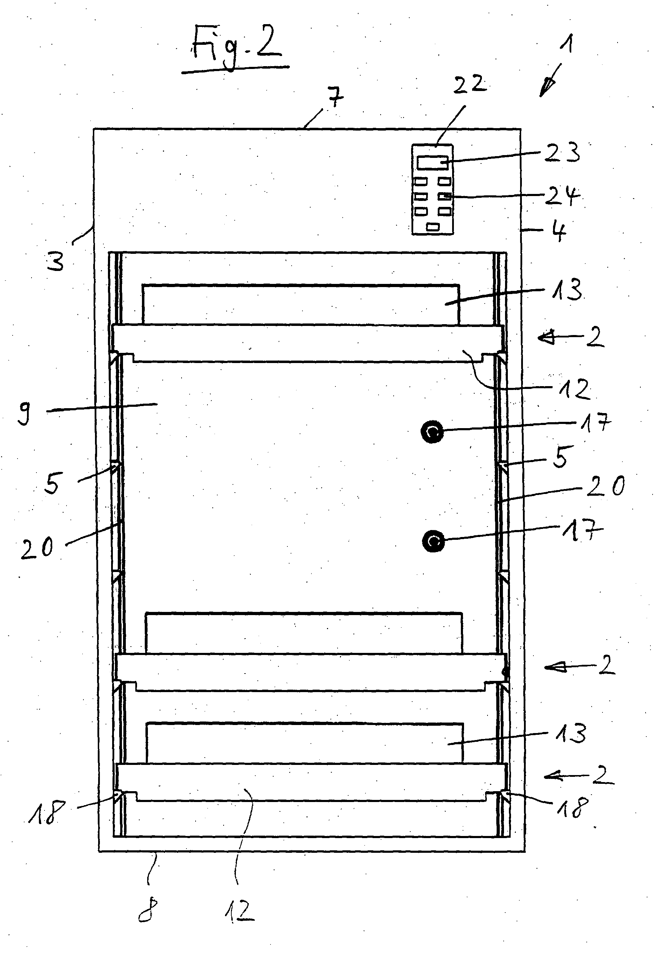

Das in Fig. 1 bis 3 gezeigte Wärmeregal besteht aus einem Gestell 1 und mehreren Wärmeplatten 2. Das Gestell 1 umfaßt eine linke Seitenwand 3 und eine rechte Seitenwand 4. An beiden Seitenwänden sind horizontale Führungen 5 für die Wärmeplatten vorgesehen. Die Führungen 5 können als nach innen weisende Prägungen ausgestaltet sein. Ferner umfaßt das Gestell eine hintere Wand 6, eine obere Wand 7 und eine Bodenplatte 8. Vor der hinteren Wand 6 ist eine parallel zu dieser und dem Abstand von dieser verlaufende vertikale Zwischenwand 9 vorhanden.

Die Wärmeplatten 2 umfassen einen Rahmen, der von einem linken Rahmenteil 10, einem rechten Rahmenteil 11, einem vorderen Rahmenteil 12 und einem hinteren Rahmenteil 13 gebildet wird, und eine innerhalb des Rahmens vorgesehene Heizplatte 14. Auf die Heizplatte 14, die aus Glas hergestellt ist, ist eine meanderförmig verlaufende Leiterbahn 15 aufgedruckt. Die Enden der Leiterbahn 15 sind mit einer Stromkupplung 16 verbunden, die in dem hinteren Rahmenteil 13 vorgesehen ist und die bündig mit der hinteren Endfläche des hinteren Rahmenteils 13 abschließt.

An der vertikalen Zwischenwand 9 sind entsprechende Stromkupplungen 17 vorgesehen, die im wesentlichen zylinderförmig ausgestaltet sind und die in Richtung nach vorne von der Zwischenwand 9 abstehen. Wenn eine Wärmeplatte 2 auf den zugehörigen Führungen 5 in das Gestell 1 hineingeschoben wird, werden die Stromkupplungen 16, 17 miteinander verbunden, wenn sich die Wärmeplatte 2 in ihrer vollständig eingeschobenen Endstellung befindet. Die Stromkupplungen 16, 17 sind nach dem Prinzip des Cordless-Wasserkochers ausgebildet. Wenn sich die Wärmeplatte 2 in ihrer Endstellung befindet, wird der Stromkreis über die Stromkupplungen 16, 17 geschlossen. Die Leiterbahn 15 der Wärmeplatte 2 ist dann an eine Stromquelle (in der Zeichnung nicht dargestellt) angeschlossen.

Die Wärmeplatten 2 sind in dem Gestell 1 fixierbar. Dies ist insbesondere deshalb vorteilhaft oder erforderlich, um zu verhindern, daß die Verbindung der Stromkupplungen 16, 17 unbeabsichtigt gelöst wird. In der Stromkupplung 16 ist eine Druckfeder vorhanden, deren Kraft überwunden werden muß, um die Stromkupplungen 16, 17 miteinander zu verbinden. Die Kraft dieser Druckfeder könnte die Wärmeplatte 2 wieder von der Zwischenwand 9 weg bewegen, wodurch die Verbindung der Stromkupplungen 16, 17 gelöst werden könnte. Dies wird durch die Fixierung der Wärmeplatten 2 in dem Gestell 1 verhindert.

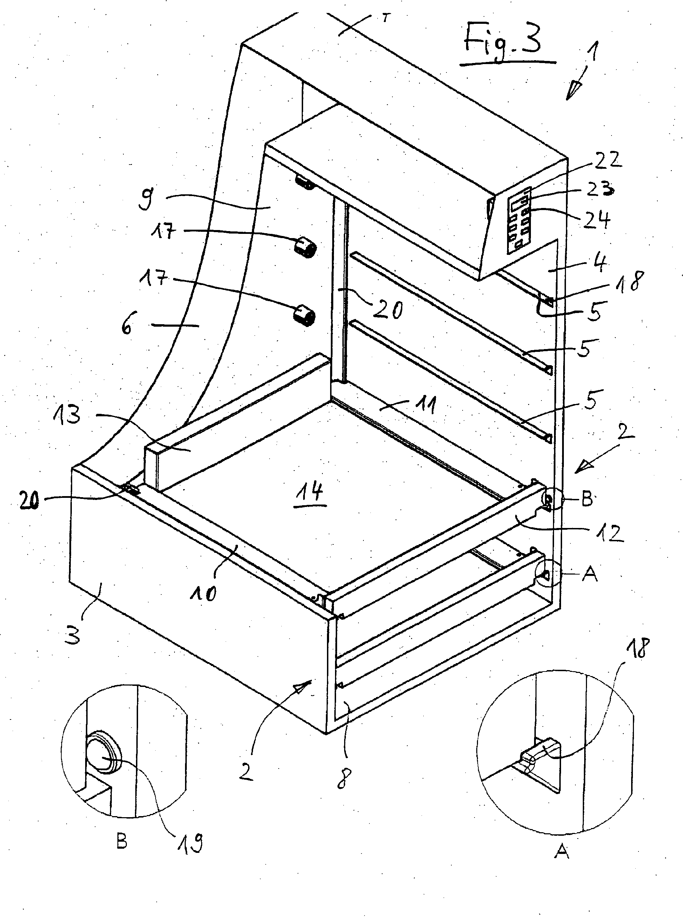

In der Einzelheit A in Fig. 3 ist eine Fixierungsmöglichkeit gezeigt, die durch eine Verriegelungsnase 18 gebildet wird. Die Verriegelungsnase 18 befindet sich am vorderen Ende der Führung 5. Sie überragt die Führung 5 nach oben. Beim Einschieben der Wärmeplatte 2 wird diese zunächst zumindest in ihrem vorderen Bereich leicht angehoben, um die Verriegelungsnase 18 zu überwinden. Wenn die Wärmeplatte 2 ihre Endposition erreicht hat, kann sie abgesenkt und vollständig auf die Führungen 5 aufgelegt werden. Durch die Verriegelungsnase 18 wird eine Bewegung nach vorne, also nach außen, verhindert. Der Abstand der Verriegelungsnase 18 von der Zwischenwand 9 ist derart bemessen, daß die Stromkupplungen 16, 17 bei vollständig eingeschobener Wärmeplatte 2 zuverlässig verbunden sind und bleiben.

Bei der in Fig. 3 in der Einzelheit B gezeigten Abwandlung wird die Fixierungsmöglichkeit für die Wärmeplatte 2 von einem Kugeldruckstück 19 gebildet. Dabei handelt es sich um ein kugelförmiges oder teilkugelförmiges Bauteil, das durch eine Druckfeder (in der Zeichnung nicht dargestellt) zum Inneren des Gestells 1 vorbelastet ist. Beim Vorbeischieben der Wärmeplatte 2 wird das Kugeldruckstück 19 durch das rechte Rahmenteil 11 in die rechte Seitenwand 4 hineingedrückt. Wenn sich die Wärmeplatte 2 in ihrer vollständig eingeschobenen Endstellung befindet, in der die Strom kupplungen 16, 17 miteinander verbunden sind, wird das Kugeldruckstück 19 durch die Druckfeder aus der rechten Seitenwand 4 heraus- und ins Innere des Gestells 1 hineingedrückt, so daß sie die in der Einzelheit B der Fig. 3 gezeigte Position einnimmt, in der das Kugeldruckstück 19 an der Außenkante des vorderen Rahmenteils 12 anliegt und verhindert, daß die Wärmeplatte 2 wieder nach außen bewegt wird. Die Kraft der Feder des Kugeldruckstücks 19 und dessen Kugelradius sind derart bemessen, daß die dadurch auf die Wärmeplatte 2 ausgeübte, nach hinten gerichtete Kraft größer ist als die von der Stromkupplung 16, 17 nach vorne ausgeübte Kraft.

Zur Fixierung der Wärmeplatte in dem Gestell kann auch ein Rollenschnäpper verwendet werden.

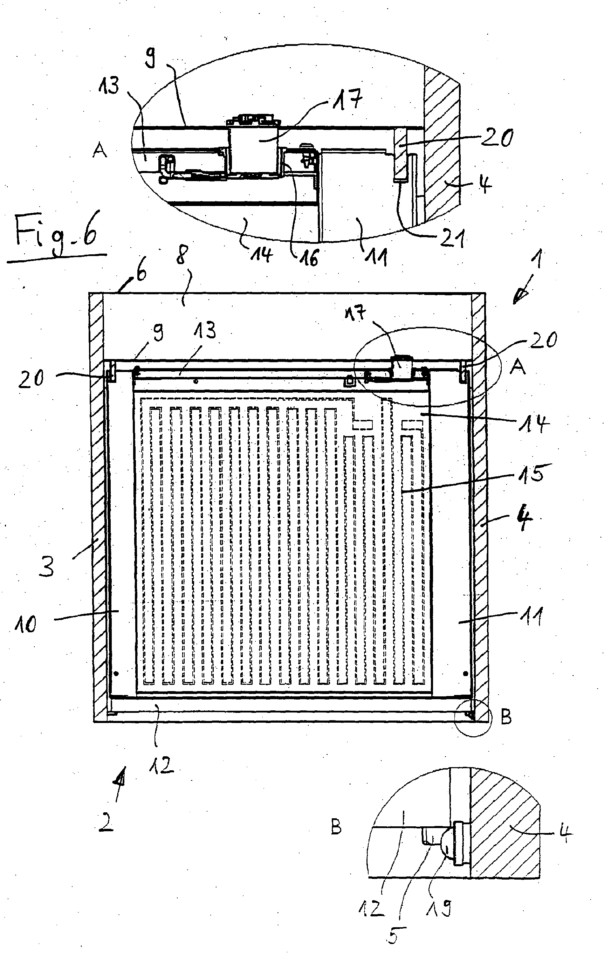

An der Zwischenwand 9 sind ferner für jede Wärmeplatte 2 jeweils zwei Führungsvorsprünge 20 vorhanden, die von der Zwischenwand 9 nach vorne in das Innere des Gestells 1 hineinragen. Die Führungsvorsprünge 20 wirken mit entsprechenden Führungsvertiefungen 21 zusammen. Wenn sich die Wärmeplatte 2 in der in Fig. 6 gezeigten hinteren Endstellung befindet, greifen die Führungsvorsprünge 20 in die Führungsvertiefungen 21 ein. Auf diese Weise wird die Wärmeplatte 2 in ihrer hinteren Endstellung zuverlässig lagerichtig fixiert. Ferner wird auch dadurch gewährleistet, daß die Stromkupplungen 16, 17 miteinander verbunden werden können. Die Führungsvertiefungen 21 weisen trichterförmige Einlaufbereiche auf, um das Erreichen der korrekten Endposition der Wärmeplatte 2 zu erleichtern. Die trichterförmigen Einlaufbereiche können auch größer sein als in der Zeichnung dargestellt. Die Führungsvertiefungen 21 befinden sich im hinteren Endbereich des linken und rechten Rahmensteils 10, 11. Der Führungsvorsprung 20 ist als durchlaufende vertikale Leiste ausgestaltet, wie insbesondere aus Fig. 3 ersichtlich.

In dem Gestell 1 ist eine Elektronik 22 zum Regeln der Temperatur der Heizplatten 14 vorgesehen. Die Elektronik umfaßt ein Anzeigefeld 23 und Eingabetasten 24.

Die Regelung der Temperatur kann auf die in der EP 1 513 374 A2 beschriebenen Weise erfolgen, also dadurch, daß der Widerstand der Heizplatte auf einen eingestellten Sollwert geregelt wird.

## Patentansprüche

1. Wärmeregal,
**gekennzeichnet durch**
ein Gestell (1), das Seitenwände (3, 4) mit Führungen (5) umfaßt,
und Wärmeplatten (2), die einen Rahmen (10, 11, 12, 13) und eine Heizplatte (14) umfassen.

2. Wärmeregal nach Anspruch 1, **gekennzeichnet durch** eine Stromkupplung (16, 17) an der Wärmeplatte (2) und an dem Gestell (1).

3. Wärmeregal nach Anspruch 1 oder 2, **dadurch gekennzeichnet, daß** die Wärmeplatten (2) in dem Gestell (1) fixierbar sind.

4. Wärmeregal nach Anspruch, **gekennzeichnet durch** eine Verriegelungsnase (18).

5. Wärmeregal nach Anspruch 3 oder 4, **gekennzeichnet durch** ein Kugeldruckstück (19).

6. Wärmeregal nach einem der vorhergehenden Ansprüche, **dadurch gekennzeichnet, daß** an dem Gestell (1) ein Führungsvorsprung (20) und an der Wärmeplatte (2) eine entsprechende Führungsvertiefung (21) vorgesehen sind.

7. Wärmeregal nach einem der vorhergehenden Ansprüche, **gekennzeichnet durch** eine Elektronik (22) zum Regeln der Temperatur einer oder mehrerer oder aller Heizplatten (14).
